# EUROPÄISCHE PATENTANMELDUNG

(11) **EP 0 900 972 A1**
(43) Veröffentlichungstag der Anmeldung: **10.03.1999**
(21) Anmeldenummer: 98116708.3
(22) Anmeldetag: 03.09.1998
(51) Int. Cl.: F21M 3/18

(54) **Scheinwerfer für Fahrzeuge**

(30) Priorität: 06.09.1997 DE 19739089
(71) Anmelder: Hella KG Hueck & Co., 59552 Lippstadt (DE)
(72) Erfinder: Eichorn, Karsten, Dr., 59320 Ennigerloh (DE); Kalze, Franz-Josef, 33428 Harsewinkel (DE); Giepen, Bernd, 59597 Erwitte (DE); Topp, Ewald, 59629 Anröchte (DE); Lachmeyer, Roland, Dr., 59505 Bad Sassendorf (DE)

(57) **Zusammenfassung**

Der Scheinwerfer für Fahrzeuge weist einen Reflektor (1) mit zwei Brennorten auf. Zwischen einer Linse (2) und dem Reflektor (1) ist eine Blendenwelle (3) mit einer horizontal und quer zur optischen Achse verlaufenden Drehachse (8) angeordnet. Die Blendenwelle (3) ist durch ein erstes Antriebsmittel (16) in mehrere Drehstellungen verstellbar. In jeder Drehstellung weist die Blendenwelle eine Brennlinie (4,5,6, oder 7) auf, welche eine Hell-Dunkel-Grenze (19,20,21 bzw. 22) einer Lichtfigur (23,24,25 bzw. 26) erzeugt. Mit der Blendenwelle (3) ist ein zweites Antriebsmittel (17) gekoppelt, durch welches die Blendenwelle (3) in Richtung der Drehachse (8) verstellbar ist.

## Beschreibung

Die Erfindung betrifft einen Scheinwerfer für Fahrzeuge mit einem zwei Brennorte aufweisenden schalenförmigen Reflektor und mit einer zwischen einer Linse und dem Reflektor angeordneten Blendenwelle, welche durch ein erstes Antriebsmittel um eine horizontale und quer zur optischen Achse verlaufende Drehachse in mehrere Drehstellungen verstellbar ist und deren Mantelfläche für jede Drehstellung eine Brennlinie aufweist, welche eine Hell-Dunkel-Grenze einer Lichtfigur erzeugt.

Ein solcher Scheinwerfer für Fahrzeuge ist aus der DE 43 35 286 A1 bekannt und weist ein Lichtsystem auf, welches im wesentlichen aus einem ellipsoidförmigen Reflektor, einer im inneren Brennort des Reflektors angeordneten Lichtquelle, einer das Licht sammelnden Linse und einer zwischen Reflektor und Linse angeordneten drehbaren Blendenwelle besteht. Als Lichtquelle kann eine Gasentladungslampe dienen. Die drehbare Blendenwelle ist mindestens mit einem Antriebsmittel gekoppelt. Die Drehachse der Blendenwelle verläuft horizontal und quer zur optischen Achse des Lichtsystems und ist exzentrisch zur zylindrischen Mantelfläche der Blendenwelle angeordnet. Die zylindrischen Mantelflächenabschnitte der Blendenwelle sind so versetzt zueinander angeordnet, daß die Blendenwelle eine umlaufende Stufe aufweist. Durch das Antriebsmittel ist die Blendenwelle in mehrere Drehstellungen drehbar. In jeder Drehstellung bildet die Mantelfläche in ihrem oberen Bereich eine Brennlinie, welche eine Hell-Dunkel-Grenze einer Lichtfigur erzeugt. Wegen der exzentrisch angeordneten Drehachse verlaufen in jeder Drehstellung der Blendenwelle die Brennlinien auf unterschiedlichem Höhenniveau. Somit ist in mehreren Drehstellungen der Blende ein asymmetrisches Abblendlicht gegeben, welches mehr oder weniger weit reicht. Ein sehr weitreichendes Abblendlicht ist vorteilhaft für eine Autobahnfahrt, und ein weniger weitreichendes Licht für eine Stadtfahrt. Damit der Scheinwerfer mit der Blendenwelle, welche in mehreren Drehstellungen abgeblendetes Licht erzeugt, in Straßenkurven der Fahrbahn folgt, um die eigene Fahrbahn besser auszuleuchten bzw. den Gegenverkehr nicht zu blenden, müßte die aus ellipsoidförmigem Reflektor, Blendenwelle und Linse bestehende Lichteinheit durch ein Antriebsmittel schwenkbar ausgeführt sein. Die Schwenkvorrichtung müßte wegen der großen Masse der Lichteinheit entsprechend groß dimensioniert sein. Dies ist mit dem Ziel, sowohl den Scheinwerfer möglichst kostengünstig herzustellen als auch den Scheinwerfer möglichst leicht zu bauen, nicht vereinbar.

Aus der DE 297 04 468 U1 ist ein Scheinwerfer für Fahrzeuge bekannt geworden, bei dem der gesamte Reflektor durch ein elektrisches Antriebsmittel schwenkbar ist, damit bei einer Kurvenfahrt des Fahrzeugs der Scheinwerfer dem Straßenverlauf folgen kann.

Bei einem aus der DE 43 24 829 A1 bekannt gewordenen Scheinwerfer für Fahrzeuge ist zwischen einem ellipsoidförmigen Reflektor und einer Linse ebenfalls eine Blendenwelle angeordnet. Die Blendenwelle weist einen großen und kleinen Zylinderabschnitt auf. Die Zylinderabschnitte sind getrennt durch eine umlaufende Stufe. Dadurch ist mit der Blendenwelle ein asymmetrisches Abblendlicht erzeugbar. Die Stufe verläuft spiralförmig um den Umfang der Blendenwelle herum. Beim Drehen der Welle durch ein Antriebsmittel wandert die Stufe in Horizontalrichtung, und somit kann bei einer entsprechenden Ansteuerung des Scheinwerfers das asymmetrische Abblendlicht in Straßenkurven dem Verlauf der Fahrbahn folgen. Nachteilig bei einem solchen Scheinwerfer ist, daß die Blendenwelle nicht in mehreren Drehstellungen Brennlinien auf unterschiedlichem Höhenniveau aufweisen kann, um zum Beispiel asymmetrisches Abblendlicht und asymmetrisches Autobahnlicht zu erzeugen.

Aufgabe der Erfindung ist es, den im Gattungsbegriff beschriebenen Scheinwerfer für Fahrzeuge derart zu gestalten, daß auch mit einer Blendenwelle, welche in mehreren Drehstellungen eine abgeblendete Lichtfigur für ein Fahren gerade nach vorn erzeugt, durch eine einfache und kostengünstige Vorrichtung zusätzlich Kurvenlicht möglich ist, d. h. daß in Straßenkurven der Gegenverkehr frei von störender Blendung und die eigene Fahrbahnseite möglichst gut ausgeleuchtet ist. Diese Aufgabe wird nach der Erfindung dadurch gelöst, daß die Blendenwelle mit einem zweiten Antriebsmittel gekoppelt ist, durch welches die Blendenwelle in Richtung der Drehachse verstellbar ist. Der Scheinwerfer baut weiterhin leicht, da nicht die gesamte Lichteinheit, welche aus Reflektor, Blendenwelle und Linse besteht, verstellt werden muß, sondern nur die Blendenwelle. Das zweite Antriebsmittel ist mit einer Steuereinrichtung des Fahrzeugs gekoppelt. Die Blendenwelle kann in den verschiedenen Drehstellungen auf unterschiedlichem Höhenniveau verlaufende Brennlinien aufweisen, welche die Hell-Dunkel-Grenze zum Beispiel für asymmetrisches, normales Abblendlicht, asymmetrisches Autobahnlicht, symmetrisches Stadtlicht und symmetrisches Fernlicht erzeugt.

Hierbei ist es vorteilhaft, wenn als erstes Antriebsmittel ein Elektromotor - entweder ein Gleichstrommotor mit Lagerückmeldung oder ein Schrittmotor - dient, welcher über z. B. ein Schneckengetriebe die Blendenwelle antreibt und positioniert. Dabei ist das Getriebe so ausgelegt, daß es weitgehend selbsthemmend ist, daß sich also die Blendenwelle auch bei stromfreiem Motor nicht selbsttätig verstellen kann. Des weiteren ist die Blendenwelle mit dem ersten Antriebsmittel zwar in ihren Drehbewegungen fest gekuppelt, axial translatorisch jedoch über einen entsprechenden Kupplungsfreiheitsgrad gegenüber dem ersten Antriebsmittel frei beweglich. Das erste Antriebsmittel ist seitlich neben dem Reflektor, relativ weit unterhalb der HDG angeordnet. Benutzt man als Antriebsmittel einen Schrittmotor, so können Endanschläge als Referenzlagen eingesetzt werden. Zur Lagerückmeldung für den DC-Motor eignen sich insbesondere Potentiometer, aber auch alle anderen Drehwinkelgeber.

Als zweites Antriebsmittel für die translatorische Verstellung der Blendenwelle eignet sich ebenfalls ein Elektromotor, wie z. B. ein Schritt-, Linear- oder Gleichstrommotor, mit einem translatorisch bewegbaren Verstellteil. Solche Elektromotoren sind kostengünstige Einkaufsteile. In diesem Zusammenhang ist es vorteilhaft, wenn der Elektromotor mit einer Lagerückmeldeeinrichtung gekoppelt ist, die als Referenz für die Einstellposition der Blendenwelle durch das zweite Antriebsmittel dient. Die Lagerückmeldung kann zum Beispiel über ein Potentiometer erfolgen. Durch die Lagerückmeldeeinrichtung ist eine große Sicherheit bei der Positionierung der verstellbaren Blendenwelle gegeben. Alternativ können beim Einsatz von Schrittmotoren auch hier Endanschläge ausreichen.

Die translatorische Verstellung der Blendenwelle durch das zweite Antriebsmittel ist funktionssicher, wenn die Blendenwelle über einen Mitnehmer mit dem zweiten Antriebsmittel gekoppelt ist, wobei der Mitnehmer einen zweiarmigen Hebel aufweist, von dem ein Arm gelenkig mit der Blendenwelle und der andere Arm gelenkig mit dem translatorisch bewegbaren Verstellteil des zweiten Antriebsmittels verbunden ist und die Achse des Verstellteils und der Blendenwelle parallel zueinander verlaufen. Hierbei ist nur eine kleine Verstellkraft des zweiten Antriebsmittels notwendig.

Die Blendenwelle ist sowohl durch das erste als auch durch das zweite Antriebsmittel mit einfach gestalteten Elementen verstellbar, wenn die Blendenwelle mit einem Endabschnitt, welcher der Antriebsseite zur translatorischen Verstellung abgewandt ist, in ihrer Längsrichtung in einem Kupplungsteil verstellbar geführt ist, wobei das Kupplungsteil und die Blendenwelle drehfest miteinander verbunden sind und das Kupplungsteil mit dem ersten Antriebsmittel über ein Getriebe gekoppelt ist. Das Kupplungsteil kann Teil einer Klauenkupplung sein.

Die Blendenwelle baut sehr leicht, wenn ihre Mantelfläche mindestens in einem zwei Brennlinien verbindenden Flächenabschnitt gegenüber einer Zylinderfläche abweichend und unregelmäßig verläuft. Die Brennlinien für asymmetrisches und symmetrisches Licht können beliebig gewählt sein. Der Abstand der meisten Brennlinien zu der Drehachse kann wesentlich kleiner ausgeführt sein als bei den bekannten Blendenwellen mit zylindrischen Mantelflächenabschnitten. Somit ist die Masse der Blendenwelle kleiner als bei der bekannten Blendenwelle. Bei einer Blendenwelle mit einer geringen Masse können auch die Antriebsmittel entsprechend klein dimensioniert sein. Weiterhin kann die Blendenwelle so ausgelegt sein, daß die Drehachse durch den Massenschwerpunkt oder nahe dem Massenschwerpunkt der Blendenwelle verläuft und somit für die Blendenwelle keine Ausgleichsgewichte notwendig sind.

Das zweite Antriebsmittel ist platzsparend angeordnet und trotzdem keinen zu hohen Temperaturen ausgesetzt, wenn für Lichtstrahlen der Lichtquelle des Scheinwerfers unterhalb der Blendenwelle ein Abschatter angeordnet ist, welcher mit seinem oberen Randabschnitt zur Blendenwelle und mit seinem unteren Randabschnitt benachbart zum vorderen Rand des Reflektors verläuft, wobei das zweite Antriebsmittel in einem wärmeunkritischen Bereich zwischen Abschatter und Linse angeordnet ist. Außerdem können aus dem Reflektor keine störenden Lichtstrahlen austreten.

Ausführungsbeispiele nach der Erfindung sind in der Zeichnung dargestellt, und zwar zeigen
Figur 1 in einer perspektivischen Ansicht ein Lichtsystem eines Scheinwerfers für Fahrzeuge im Prinzip, welches im wesentlichen aus einem Reflektor, einer Linse und einer Blendenwelle mit Antriebsmitteln besteht;

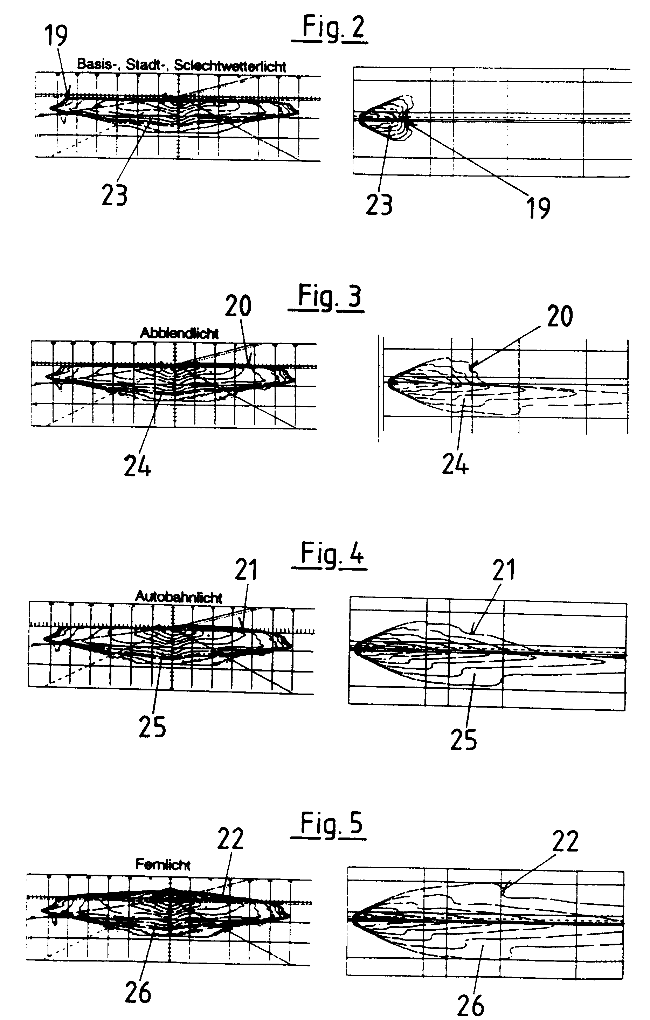

Figur 2 eine Lichtfigur für Basis-, Stadt- oder Schlechtwetterlicht auf einer senkrecht stehenden Wand und auf der Fahrbahn;
Figur 3 eine Lichtfigur für Abblendlicht auf einer senkrecht stehenden Meßwand und auf der Fahrbahn;
Figur 4 eine Lichtfigur für Autobahnlicht auf einer senkrecht stehenden Meßwand und auf der Fahrbahn;
Figur 5 eine Lichtfigur für Fernlicht auf einer senkrecht stehenden Meßwand und auf der Fahrbahn;

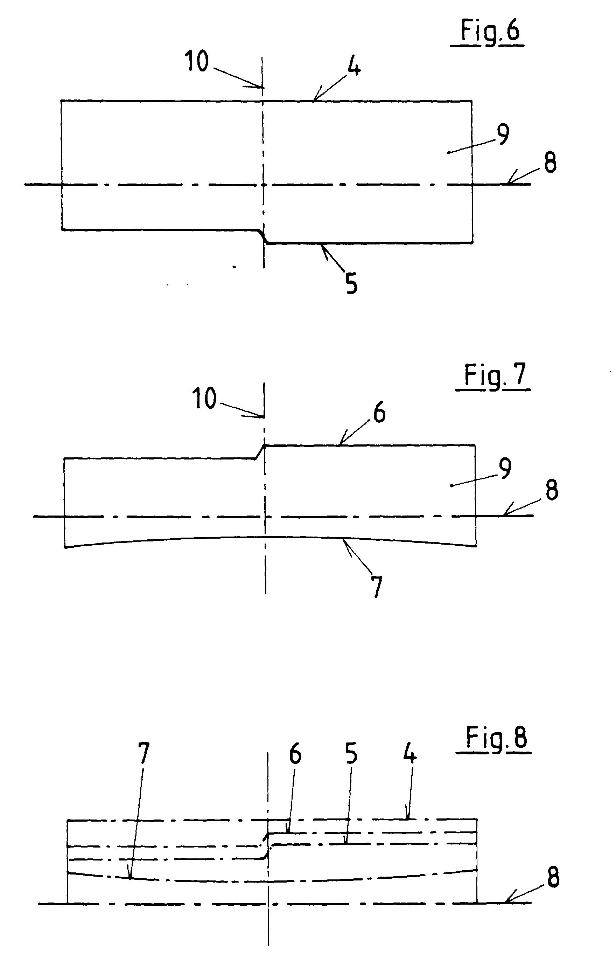

Figur 6 und 7 eine Ansicht der Blendenwelle in Richtung der optischen Achse mit einer Brennlinie für symmetrisches und einer Brennlinie für asymmetrisches Licht;
Figur 8 eine Ansicht für Brennlinien der Blendenwelle in ihrer optisch wirksamen Lage;
Figur 9 eine Querschnittsfläche einer Blendenwelle mit fünf Brennlinien;
Figur 10 in einer Seitenansicht eine Lichteinheit eines Scheinwerfers, dessen zweites Antriebsmittel über ein Getriebe mit der Blendenwelle verbunden ist;
Figur 11 einen Schnitt nach der Linie A-A in Figur 10;
Figur 12 eine Ansicht aus Richtung X in Figur 10;
Figur 13 in einer perspektivischen Ansicht eine Lichteinheit, bei der das zweite Antriebsmittel mit der Blendenwelle ohne zwischengeschaltetes Getriebe gekoppelt ist;
Figur 14 Abblendlichtfiguren in der Linkskurve;
Figur 15 Abblendlichtfiguren auf einer gerade verlaufenden Straße und
Figur 16 Abblendlichtfiguren in der Rechtskurve.

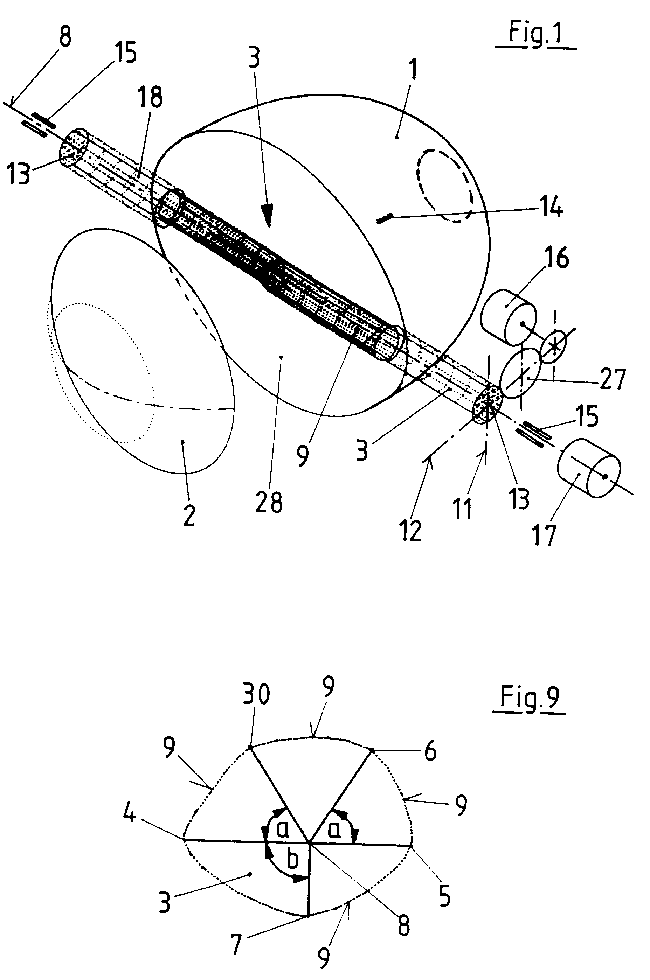

Figur 1 zeigt einen Scheinwerfer für Fahrzeuge mit einer Lichteinheit, die im wesentlichen aus einem ellipsoidförmigen Reflektor (1), einer Lichtquelle (14), einer vor dem Reflektor angeordneten Linse (2) und einer mit Antriebsmitteln (16 und 17) gekoppelten Blendenwelle (3) besteht. Die von dem Lichtbogen einer nicht dargestellten Gasentladungslampe gebildete Lichtquelle (14) ist in dem inneren Brennort des ellipsoidförmigen Reflektors (1) angeordnet. Die Blendenwelle (3) ist durch das erste Antriebsmittel (16) über ein Getriebe (27) um die Drehachse (8) in vier Drehstellungen verstellbar. Die Blendenwelle (3) ist mit seitlich abstehenden Lagerelementen, welches nicht dargestellte Lagerzapfen sind, in Lagerhalter (15) eingesetzt. Das zweite Antriebsmittel (17) dient zur translatorischen Verstellung der Blendenwelle (3). Die Drehachse (8) der Blendenwelle (6) verläuft horizontal und quer zur optischen Achse des Reflektors (1). Die Blendenwelle (9), welche in vier Drehstellungen bringbar ist, bildet in jeder Drehstellung eine optisch wirksame Brennlinie (4, 5, 6 bzw. 7). Die erste und zweite Brennlinie (4 und 5) liegen gemeinsam in einer Fläche (11) und die dritte und vierte Brennlinie (6 und 7) in einer gemeinsamen Fläche (12). Die Flächen (11 und 12) verlaufen senkrecht zueinander, und deren Schnittlinie fällt mit der Drehachse (8) zusammen. Die erste Brennlinie (4) erzeugt die Hell-Dunkel-Grenze (19) eines symmetrischen Abblendlichts, welches als Basis-, Stadt- oder Schlechtwetterlicht (Figur 23) zu bezeichnen ist und ausschließlich den nahen Bereich der Fahrbahn vor dem Fahrzeug ausleuchtet. Die zweite Brennlinie (6) erzeugt die Hell-Dunkel-Grenze (20) für das übliche asymmetrische Abblendlicht (Lichtfigur 24), bei dem die eigene Fahrbahnseite wesentlich weiter ausgeleuchtet ist als die Gegenfahrbahnseite. Die zweite Brennlinie (5) erzeugt die Hell-Dunkel-Grenze (21) eines asymmetrischen Autobahnlichtes (Lichtfigur 25). Hierbei ist die eigene Fahrbahnseite ebenso wie beim üblichen asymmetrischen Abblendlicht weitreichend ausgeleuchtet, während die benachbarte Fahrbahnseite weiter ausgeleuchtet ist als beim üblichen asymmetrischen Abblendlicht. Die Brennlinie (7) erzeugt die Hell-Dunkel-Grenze (22) eines symmetrischen Fernlichtes (Lichtfigur 26). Die Brennlinien (4, 5, 6 und 7) weisen einen unterschiedlichen Verlauf auf, und zwar verläuft die erste Brennlinie (4) gerade und in einem äquidistanten Abstand zur Drehachse (6), die zweite und dritte Brennlinie (5 und 6) mit einem Brennlinienabschnitt schräg zur Drehachse und mit dem anderen Brennlinienabschnitt in einem äquidistanten Abstand zur Drehachse (8) und die vierte Brennlinie (7) in einem konkaven Bogen. Die Brennlinien (4, 5, 6 und 7) sind durch Freiform-Mantelflächenabschnitte bzw. unregelmäßig verlaufende Flächenabschnitte (9), welche von dem Verlauf einer Zylinderfläche abweichen, verbunden. Die Flächenabschnitte (9) sind zum größten Teil konvex ausgeführt und können mindestens an einer der Brennlinien (4, 5, 6 und 7) in einer Kante auslaufen. Die zur Verstellung der Blendenwelle (3) dienenden Antriebsmittel (16 und 17) können jeweils mit einem Elektromotor, wie z. B. einem Gleichstrom-, Schritt- oder Linearmotor, ausgestattet sein. Die Elektromotoren können über eine Lagerückmeldeeinrichtung (nicht dargestellt), wie z. B. Potentiometer, Sensor oder Anschlag, verfügen. Die Lagerückmeldeeinrichtung dient als Referenz für die Einstellpositionen der Blendenwelle (3) durch den Elektromotor.

Unterhalb der Blendenwelle (3) ist ein plattenförmiger Abschatter (28) an dem Reflektor (1) angebracht, welcher mit seinem oberen Randabschnitt zur Blendenwelle (3) beabstandet ist und, in Lichtaustrittsrichtung gesehen, vor oder hinter der Blende (3) angeordnet ist. Somit sind in jeder Drehstellung der Blendenwelle (3) die unterhalb der jeweils optisch wirksamen Brennlinie (4, 5, 6 und 7) verlaufenden Lichtstrahlen bis zum unteren Rand des Abschatters (28) abgeschirmt. Hierbei ist es vorteilhaft, wenn der untere Rand des Abschatters (28) in seiner gesamten Länge zu dem vorderen Rand des Reflektors (1) benachbart verläuft bzw. an dem vorderen Rand des Reflektors (1) anliegt.

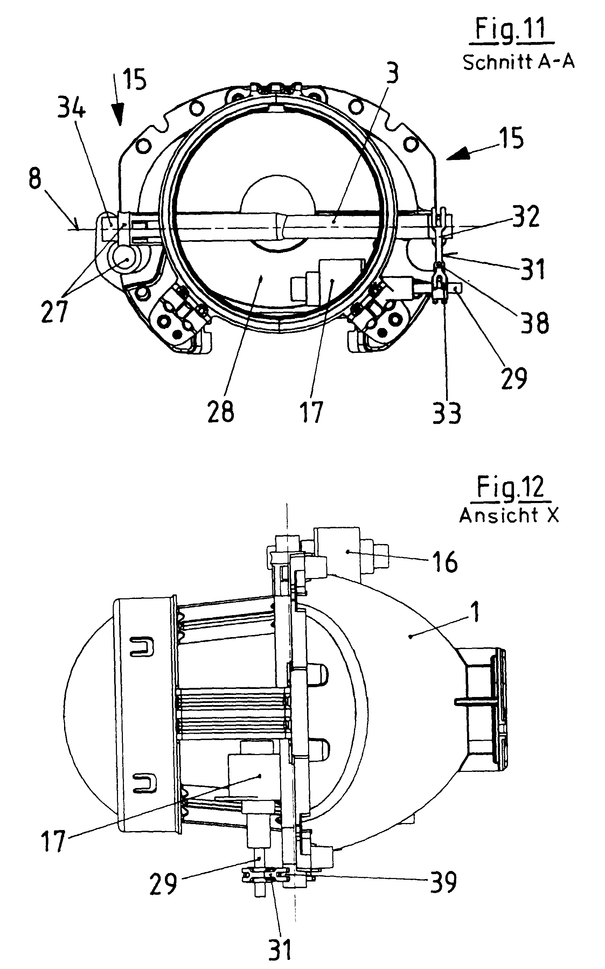

Die Blendenwelle (3) in Figur 9 weist zusätzlich zu den Brennlinien (4, 5, 6 und 7) die fünfte Brennlinie (30) für symmetrisches Abblendlicht auf. Die Drehstellung der Blende (3) für symmetrisches Abblendlicht macht dann Sinn, wenn z. B. ein für Rechtsverkehr ausgeleuchtetes Fahrzeug vorübergehend in einem Land mit Linksverkehr gefahren wird. In dem Land für Linksverkehr sind die eine asymmetrische Lichtfigur ergebenden Brennlinien (5 und 6) gesetzlich nicht erlaubt, da mit diesem Licht der Gegenverkehr stark geblendet würde. Ein Verstellen der Blendenwelle zwischen der Brennlinie (4) für Nebellicht und der Brennlinie (7) für Fernlicht erfolgt immer über die Brennlinien (30, 6 und 5). Die Brennlinien (5 und 4) liegen in einer Fläche, in welcher die unterhalb zur optischen Achse angeordnete Drehachse (8) verläuft. Die Brennlinien (30 und 6) verlaufen jeweils mit der Drehachse (8) in einer Fläche, welche in einem spitzen Winkel (a) zur Fläche verläuft, in der die Brennlinien (4 und 5) liegen. Der spitze Winkel (a) ist ca. 60° groß. Die Fläche, in welcher die Brennlinien (7) für Fernlicht und die Drehachse (8) verlaufen, steht annähernd in einem rechten Winkel zu der Fläche, in welcher die Brennlinien (4 und 5) verlaufen. Die Flächenabschnitte (9) zwischen den Brennlinien (4, 30, 6, 5 und 7) verlaufen konvex.

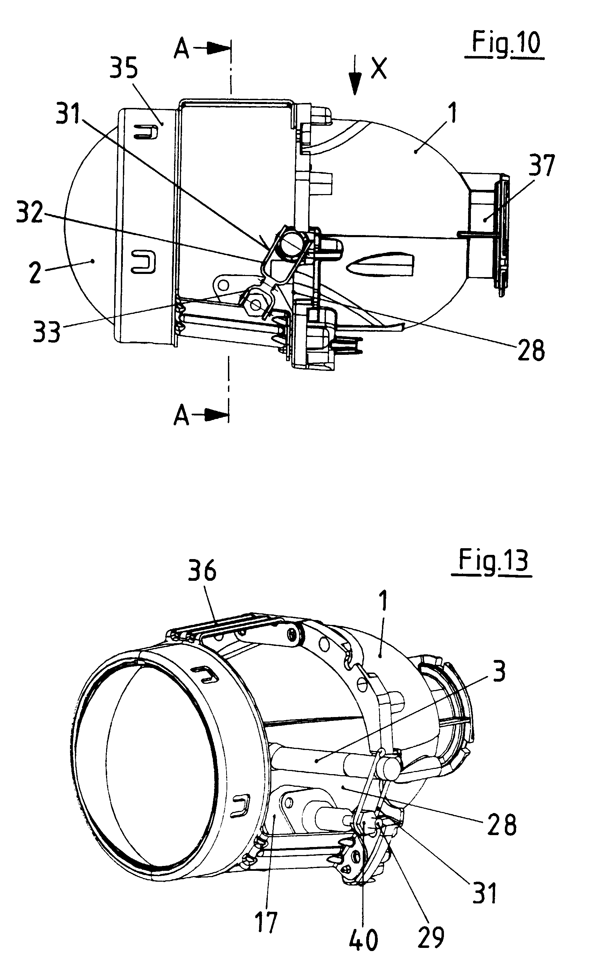

In den Figuren 10, 11 und 12 ist eine Lichteinheit für Fahrzeuge dargestellt, bei dem ein die Linse tragender Halter (35) mit dem vorderen umlaufenden Rand des Reflektors (1) verbunden ist. Der Halter (35) ist in dem die Linse aufnehmenden Bereich ringförmig gestaltet und weist Tragbeine (36) auf, welche mit dem Reflektor (1) verbunden sind. Der ellipsoidförmige Reflektor (1) weist an seiner Rückseite einen Hals (37) auf, in welcher die nicht dargestellte Lichtquelle einsetzbar ist. Als Lichtquelle kann eine Gasentladungslampe dienen. Die Blendenwelle (3) greift mit ihren beiden Endabschnitten jeweils in einen Lagerhalter (15) ein. Von den Lagerhaltern (15) ist nur der das Kupplungsteil (34) aufweisende Lagerhalter (15) dargestellt. Das Kupplungsteil (34) gehört zu einer Klauenkupplung. Durch die Klauenkupplung ist die Blendenwelle drehfest mit dem Kupplungsteil (34) verbunden und translatorisch verschiebbar. Das Kupplungsteil ist über ein Getriebe (27) mit dem ersten Antriebsmittel (16) gekoppelt. Das erste Antriebsmittel (16) ist ein Elektromotor, welcher seitlich neben dem Reflektor (1) in einem wärmeunkritischen Bereich angeordnet ist und mit seiner Längsachse parallel zur optischen Achse des Reflektors (1) verläuft. Das Getriebe (27) weist eine Schnecke und ein Zahnrad auf. Die Schnecke ist an der Antriebswelle des ersten Antriebsmittels (16) angebracht, während das Zahnrad von der Mantelfläche des Kupplungsteils (34) gebildet ist. Als zweites Antriebsmittel (17) dient ein Elektromotor, welcher ein translatorisch verstellbares Verstellteil (29) aufweist. Das zweite Antriebsmittel (17) ist unterhalb der Blendenwelle (3) und zwischen der Linse und einem Abschatter (28) angeordnet. Der Abschatter (28) erstreckt sich von der Blendenwelle (3) bis zum unteren vorderen Rand des Reflektors (1) und ist an dem vorderen Rand des Reflektors (1) befestigt. Somit ist das zweite Antriebsmittel (17) ebenfalls in einem wärmeunkritischen Bereich angeordnet. Das translatorisch bewegbare Verstellteil (29) verläuft annähernd parallel zur Längsachse der Blendenwelle (3) und ist mit einem nach außen gerichteten Endabschnitt über einen Mitnehmer (31) mit einem dem Kupplungsteil (34) abgewandten Endabschnitt der Blendenwelle (3) gekoppelt. Als Mitnehmer (31) dient ein zweiarmiger Hebel, von dem ein Arm (32) gelenkig mit der Blendenwelle (3) und der andere Arm (33) gelenkig mit dem translatorisch bewegbaren Verstellteil (29) verbunden ist. Der zweiarmige Hebel ist um ein ortsfestes Gelenk (38) schwenkbar, wobei die Achse annähernd parallel zur optischen Achse des Reflektors (1) verläuft. Der zweiarmige Hebel weist an seinen beiden freien Enden jeweils eine Gabel auf, wobei in die eine Gabel die Blendenwelle (3) und in die andere Gabel das Verstellteil (29) eingreift. Die gelenkigen Verbindungen zwischen dem zweiarmigen Hebel und dem Verstellteil (29) bzw. der Blendenwelle (3) sind von den in Längsschlitzen (39) geführten Zapfen gebildet. Die Längsschlitze (39) verlaufen in Längsausdehnung des zweiarmigen Hebels. Bei der in Figur 13 dargestellten Lichteinheit besteht der Mitnehmer (31) aus einer U-förmigen Haltefeder, deren freie Schenkel in eine umlaufende Nut der Blendenwelle eingreifen. An dem die Schenkel verbindenden Steg der Haltefeder ist die Haltefeder zwischen zwei Muttern (40) starr an dem translatorisch bewegbaren Verstellteil (29) des zweiten Antriebsmittels (17) befestigt.

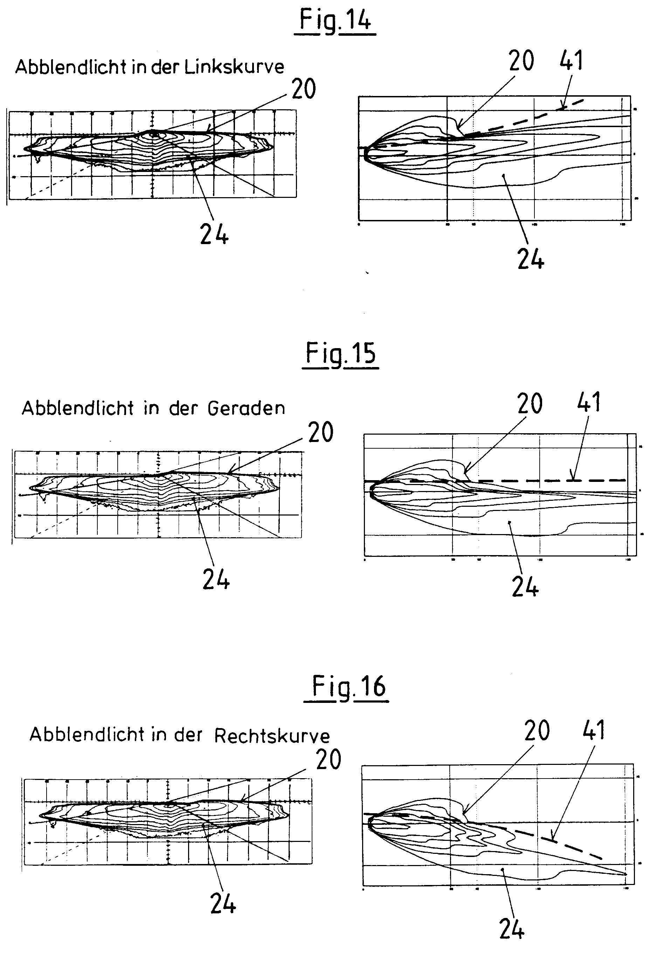

Die zweiten Antriebsmittel (17) sind über eine nicht dargestellte Steuereinrichtung des Fahrzeugs gekoppelt. Bei einer Fahrt in eine Links- bzw. Rechtskurve wird über die Steuereinrichtung das zweite Antriebsmittel (17) aktiviert und die Blendenwelle (3) translatorisch bewegt. In der Linkskurve schwenkt somit ein asymmetrisches Lichtbündel nach links und in der Rechtskurve nach rechts Der Straßenverlauf (41) ist durch eine gestrichelte Linie in den Fig. 14, 15 und 16 angedeutet.

### Bezugszeichenliste

### Scheinwerfer für Fahrzeuge

- 1: Reflektor
- 2: Linse
- 3: Blendenwelle
- 4: erste Brennlinie (für Schlechtwetterlicht)
- 5: zweite Brennlinie (für Autobahnlicht)
- 6: dritte Brennlinie (für Abblendlicht)
- 7: vierte Brennlinie (für Fernlicht)
- 8: Drehachse
- 9: Flächenabschnitt
- 10: Fläche
- 11: Fläche
- 12: Fläche
- 13: Ende
- 14: Lichtquelle
- 15: Lagerhalter
- 16: erstes Antriebsmittel
- 17: zweites Antriebsmittel
- 18: Zylinderfläche
- 19: Hell-Dunkel-Grenze (des Schlechtwetterlichtes)
- 20: Hell-Dunkel-Grenze (des Abblendlichtes)
- 21: Hell-Dunkel-Grenze (des Autobahnlichtes)
- 22: Hell-Dunkel-Grenze (des Fernlichtes)
- 23: Lichtfigur (des Schlechtwetterlichtes)
- 24: Lichtfigur (des Abblendlichtes)
- 25: Lichtfigur (des Autobahnlichtes)
- 26: Lichtfigur (des Fernlichtes)
- 27: Getriebe
- 28: Abschatter
- 29: Verstellteil
- 30: fünfte Brennlinie (symmetrisches Abblendlicht)
- 31: Mitnehmer
- 32: Arm
- 33: Arm
- 34: Kupplungsteil
- 35: Halter
- 36: Tragbeine
- 37: Hals
- 38: Gelenk
- 39: Längsschlitze
- 40: Mutter
- 41: Straßenverlauf

## Patentansprüche

1. Scheinwerfer für Fahrzeuge mit einem zwei Brennorte aufweisenden schalenförmigen Reflektor (1) und mit einer zwischen einer Linse (2) und dem Reflektor (1) angeordneten Blendenwelle (3), welche durch ein erstes Antriebsmittel (16) um eine horizontale und quer zur optischen Achse verlaufende Drehachse (8) in mehrere Drehstellungen verstellbar ist und deren Mantelfläche für jede Drehstellung eine Brennlinie (4, 5, 6 oder 7) aufweist, welche eine Hell-Dunkel-Grenze (19, 20, 21 bzw. 22) einer Lichtfigur (23, 24, 25 bzw. 26) erzeugt, dadurch gekennzeichnet, daß die Blendenwelle (3) mit einem zweiten Antriebsmittel (17) gekoppelt ist, durch welches die Blendenwelle (3) in Richtung der Drehachse (8) verstellbar ist.

2. Scheinwerfer nach Anspruch 1, dadurch gekennzeichnet, daß das zweite Antriebsmittel (17) ein translatorisch bewegbares Verstellteil (29) aufweist.

3. Scheinwerfer nach Anspruch 1 oder 2, dadurch gekennzeichnet, daß das zweite Antriebsmittel (17) einen Elektromotor aufweist.

4. Scheinwerfer nach Anspruch 3, dadurch gekennzeichnet, daß der Elektromotor ein Schritt-, Linear- oder Gleichstrommotor ist.

5. Scheinwerfer nach Anspruch 4, dadurch gekennzeichnet, daß eine mit dem Elektromotor gekoppelte Lagerückmeldeeinrichtung als Referenz für die Einstellpositionen der Blendenwelle (3) durch das zweite Antriebsmittel (17) dient.

6. Scheinwerfer nach Anspruch 3, dadurch gekennzeichnet, daß als Lagerückmelde-Einrichtung ein Potentiometer, ein Sensor oder ein Anschlag dient.

7. Scheinwerfer nach einem der Ansprüche 1 bis 6, dadurch gekennzeichnet daß die Blendenwelle (3) über einen Mitnehmer (31) mit dem zweiten Antriebsmittel (17) gekoppelt ist, wobei der Mitnehmer (31) entweder ein Getriebe ist oder mit der Blendenwelle (3) und/oder einem translatorisch bewegbaren Verstellteil (29) des zweiten Antriebsmittels (17) starr verbunden ist.

8. Scheinwerfer nach Anspruch 7, dadurch gekennzeichnet, daß der Mitnehmer (31) einen zweiarmigen Hebel aufweist, von dem ein Arm (32) gelenkig mit der Blendenwelle (3) und der andere Arm (33) gelenkig mit dem translatorisch bewegbaren Verstellteil (29) des zweiten Antriebsmittels (17) verbunden ist, wobei die Achse des Verstellteils (29) und der Blendenwelle (3) parallel zueinander verlaufen.

9. Scheinwerfer nach einem der Ansprüche 1 bis 8, dadurch gekennzeichnet, daß die Blendenwelle (3) mit einem Endabschnitt, welcher der Antriebsseite zur translatorischen Verstellung abgewandt ist, in ihrer Längsrichtung in einem Kupplungsteil (34) verstellbar geführt ist, wobei das Kupplungsteil (34) und die Blendenwelle (3) drehfest miteinander verbunden sind und das Kupplungsteil (34) mit dem ersten Antriebsmittel (16) über ein Getriebe (27) gekoppelt ist.

10. Scheinwerfer nach einem der Ansprüche 1 bis 9, dadurch gekennzeichnet, daß die Mantelfläche der Blendenwelle (3) mindestens in einem zwei Brennlinien (4, 5, 6, 7, 30) verbindenden Flächenabschnitt (9) gegenüber einer Zylinderfläche abweichend und unregelmäßig verläuft.

11. Scheinwerfer nach einem der Ansprüche 1 bis 10, das heißt, daß für Lichtstrahlen der Lichtquelle (14) des Scheinwerfers unterhalb der Blendenwelle (3) ein Abschatter (28) angeordnet ist, welcher mit seinem oberen Randabschnitt zur Blendenwelle (3) und mit seinem unteren Randabschnitt benachbart zum vorderen Rand des Reflektors (1) verläuft, wobei das zweite Antriebsmittel in einem wärmeunkritischen Bereich zwischen Abschatter (28) und Linse (2) angeordnet ist.
